# EUROPÄISCHE PATENTSCHRIFT

(11) **EP 3 340 440 B1**
(45) Veröffentlichungstag und Bekanntmachung des Hinweises auf die Patenterteilung: **15.07.2020**
(21) Anmeldenummer: 17200351.9
(22) Anmeldetag: 07.11.2017
(51) Int. Cl.: H02K 3/52, H02K 15/095

(54) **BÜRSTENLOSER MOTOR**
BRUSHLESS MOTOR
MOTEUR SANS BALAIS

(30) Priorität: 23.12.2016 DE 102016226200
(43) Veröffentlichungstag der Anmeldung: 27.06.2018
(73) Patentinhaber: Bühler Motor GmbH, 90459 Nürnberg (DE)
(72) Erfinder: BERNREUTHER, Georg, 90449 Nürnberg (DE); AHRENS, Matthias, 90455 Nürnberg (DE); WALL, Andreas, 90453 Nürnberg (DE); BRETTSCHNEIDER, Jürgen, 90482 Nürnberg (DE); RICHTER, Olaf, 90547 Stein (DE)

(56) Entgegenhaltungen:
- EP-A1- 1 490 949
- EP-A2- 2 768 122
- EP-A2- 2 849 316
- WO-A1-2016/124636
- WO-A1-2016/177366
- WO-A1-2016/184720
- WO-A2-2013/098111
- JP-A- 2012 152 023
- US-A1- 2007 296 292
- US-B1- 7 789 337

## Beschreibung

Die Erfindung betrifft einen bürstenlosen Motor mit einem Permanentmagnetrotor und einem bewickelten Stator (1), bestehend aus einem Statorjoch (2) mit einer Mehrzahl von Statorpolen (3), einem stirnseitig angeordneten Isolierelement (4), einer eine Mehrzahl von Spulen (5) umfassende Statorwicklung (6), wobei jeder Statorpol (3) mit einer Spule (5) bewickelt ist, einer Verschaltungsanordnung (7) zum Verschalten der Spulen (5) miteinander und mit elektrischen Anschlüssen (22).

BLDC-Motoren zum Antrieb von Ölpumpen werden nach dem heutigen Stand der Technik aufgrund des geforderten hohen Beschleunigungsvermögens als Innenläufer ausgebildet. Um eine ausreichend kompakte Baugröße zu erzielen, werden dabei üblicherweise Seltenerdmagnete verwendet, die teuer sind. Da diese Motoren häufig direkt im Ölbad eingebaut sind, besteht keine Notwendigkeit, ein Stahlgehäuse als Korrosionsschutz zu verwenden. Die Statoren werden daher als blechpaketierte, selbsttragende Einheiten aufgebaut.

Die zugehörigen Statorwicklungen werden mit einer Nadelwickelmaschine aufgebracht. Dazu muss im Wickelraum zwischen den Statorpolen ein Raum freigelassen werden, in den die Wickelnadel eintauchen kann. Die Breite dieses Leerraumes beträgt üblicherweise mindestens 3x dem Nenndrahtdurchmesser und kann für die Unterbringung von Wickeldrähten nicht genutzt werden.

Das bedeutet, dass der nutzbare Wickelraum sehr stark vom Drahtdurchmesser abhängt. Je kleiner der Drahtdurchmesser, desto größer ist der nutzbare Wickelraum.

BLDC-Motoren haben meistens ein 3-phasiges Ansteuersystem. Die Anzahl der Einzelspulen ist daher immer ein Mehrfaches der Zahl 3. Üblich sind 6-, 9,- oder 12-polige Statoren; die Anzahl der Statorpole kann jedoch auch deutlich grösser sein. Dann spricht man von sogenannten Torquemotoren.

Bei den heute eingesetzten Motoren wird üblicherweise eine Reihenverschaltung der Spulen verwendet. Das bedeutet, dass nur eine relativ geringe Zahl von Windungen benötigt wird. Häufig ist die Windungszahl im einstelligen Bereich. Das bedeutet jedoch auch, dass die Wickeldrahtdurchmesser relativ groß sind in Bezug auf den zur Verfügung stehenden Wickelraum. Der Wickelraum kann daher nicht gut mit dem Wickeldraht gefüllt werden. Das Ergebnis ist eine schlechte Nutzung des Wickelraumes mit Kupferdraht.

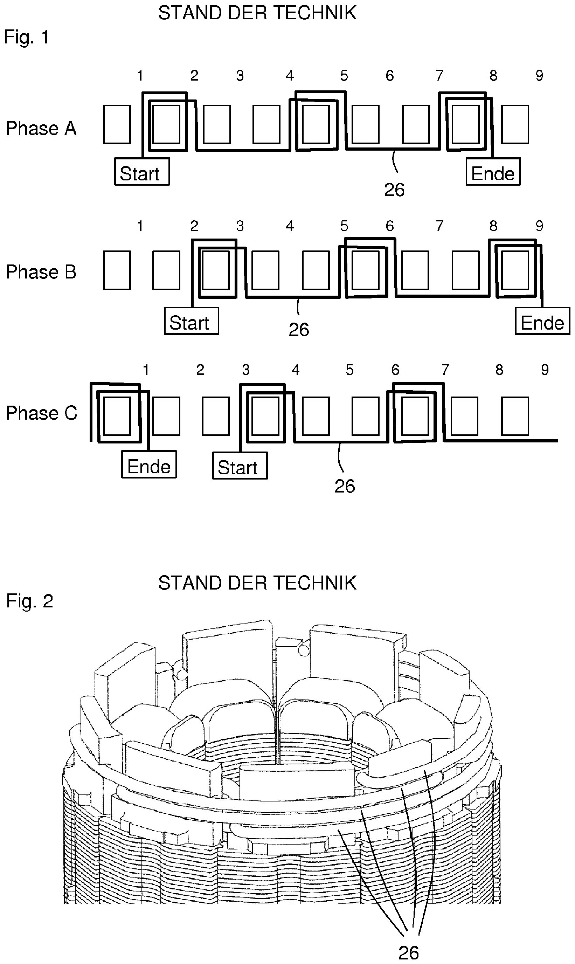

Die Verschaltung bei Reihenschaltung erfolgt, indem man nach dem Wickeln einer Spule die nächsten beiden benachbarten Spulen überspringt und dann auf der dritten Spule weiterwickelt, bis die geforderte Anzahl an Polen pro Phase bewickelt ist (Fig. 1). Das hat jedoch den Nachteil, dass man zur Verbindung der Einzelspulen einer Phase relativ lange Wege zu überbrücken hat. Die Länge des Wickeldrahtes, die zur Spulenverbindung benötigt wird, liegt häufig im Bereich einer Windungslänge. Dieser Verbindungsdraht trägt nichts zur Drehmomentbildung bei, erhöht aber sowohl das benötigte Kupfergewicht als auch den Wicklungswiderstand und erzeugt dadurch zusätzliche ohmsche Verluste.

Für die Verbindung der Einzelspulen müssen die Verbindungsdrähte axial übereinander angeordnet werden. Um eine Berührung zu vermeiden, müssen zudem Abstandshalter vorgesehen werden. Es müssen bis zu 4 Drähte parallel geführt werden (Fig. 2).

Wegen des dicken Wickeldrahtes wird daher sehr viel Raum in axialer und radialer Richtung benötigt für die Spulenverschaltung, der ebenfalls für die aktive Drehmomenterzeugung des Motors verloren geht.

Die Reihenschaltung ist trotz der genannten Nachteile weit verbreitet, weil die Verschaltungstechnik bekannt ist und weil vergleichsweise weniger Kontaktstellen zur elektronischen Steuerung benötigt werden. Bei der Reihenschaltung eines Stators in Dreieckswicklung werden je nach Wickelverfahren nur 3 - 6 Kontakte benötigt, bei Reihenschaltung mit Stern mindestens 6 Kontaktstellen. Bei einer Parallelwicklung eines Stators werden dagegen mindestens so viele Kontakte wie Spulen benötigt, bei einem 6-poligen Stator also 6 und bei einem 9-poligen Stator 9 Kontakte.

Die EP 2 849 316 A2 offenbart einen Elektromotor, insbesondere für Elektrowerkzeuge, mit einem Stator und einem Rotor, wobei der Stator einen vorderen und einen hinteren Isolator beinhaltet, die jeweils vor und hinter einem Statorkern in einer axialen Richtung davon angeordnet sind, mindestens sechs Spulen, die jeweils auf den Stator gewickelt sind, so dass die Spulen durch den vorderen und hinteren Isolator gewickelt sind, Wickeldrähte bzw. elektrisch verbindende, in Umfangsrichtung benachbarte Paare der Spulen und ein Kurzschlussmittel, das entsprechende Paare der Wickeldrähte kurzschließt, die diagonal zueinander angeordnet sind. Alle Spulen sind mit einem einzigen kontinuierlichen Wickeldraht gewickelt. Sicherungsklemmen (Verbindungsanschlüsse) werden von Halteteilen des vorderen Isolators gehalten. Jeder Verbindungsanschluss wird durch Umfalten eines streifenförmigen Metallbeschlags etwa zur Hälfte konfiguriert.

Aus der WO 2016 / 184720 A1 ist ein Stator für eine elektrische Maschine bekannt, mit einem ringförmigen Statorgrundkörper, der radiale Statorzähne zur Aufnahme von elektrischen Spulen aufweist, wobei an einer ersten Stirnseite des Statorgrundkörpers eine Isolierlamelle angeordnet ist, die die aus Wickeldraht gewickelten Spulen gegenüber dem Statorgrundkörper isoliert, wobei in der Isolierlamelle Leiterstreifen angeordnet sind, die elektrische, sich axial erstreckende Kontaktelemente aufweisen, an die beim Wickeln der Spulen der Wicklungsdraht verlegt wird. Zudem sind an zumindest einem - vorzugsweise an dem radial mittleren - Leiterstreifen mehrere sich axial erstreckende Abstützlaschen angeformt, die den Wickeldraht in Radialrichtung abstützen, wobei insbesondere die Abstützlaschen an ihrer radialen Außenseite von einer Kunststoffwand der Isolierlamelle abgedeckt sind. Die Leiterstreifen weisen Kontaktelemente auf und werden vor dem Beginn des Wickelns in die Isolierlamelle, die ringförmig umlaufende Vertiefungen aufweist, eingelegt bzw. eingepresst.

Die EP 2 768 122 A2 offenbart einen bürstenlosen Gleichstrommotor mit einem Stator 240 und einem Rotor 254, die schwenkbar innerhalb des Stators 230 angeordnet sind, wobei der Stator 230 mehrere Wicklungen 232 und mehrere elektrisch leitende Anschlüsse umfasst, die an einem Umfang des Stators 240 angeordnet sind und sich im Wesentlichen parallel zur Achse erstrecken, wobei jedes Endgerät dazu eingerichtet ist, mit mindestens einer der Wicklungen 232 und mit einer Stromquelle 108 verbunden zu werden. Die Statorwicklungen 232 können in einer Dreieckskonfiguration durch elektrisches Koppeln benachbarter Anschlüsse der ersten und der zweiten Wicklung, der zweiten und der dritten Wicklung und der dritten und ersten Wicklung an drei Verbindungspunkten verbunden sein. Eine Ablenkplatte 236 kann parallel und benachbart zu dem Stator 240 vorgesehen sein, wobei die Ablenkplatte 236 mindestens eine leitende Führung oder Prägung 602 umfasst, um das elektrische Koppeln der Wicklungen 232 in mindestens einer Delta- oder einer Sternkonfiguration zu erleichtern.

Die EP 1 490 949 A1 offenbart einen Stator für einen Elektromotor, insbesondere für einen leistungsstarken Niederspannungsmotor der Außenläufer-Bauart, mit einem Statorblechpaket mit einer Anzahl von Statornuten und Statorzähnen zur Aufnahme von Statorwicklungen und mit einer Verschaltungsanordnung zum Verschalten von Wicklungsdrähten der Statorwicklungen, wobei die um die Statorzähne in die Statornuten gewickelten Statorwicklungen auf beiden Stirnseiten das Statorblechpakets mit einem Wickelkopf überragen.

Aus der US 2007/296292 A1 ist ein Elektromotor mit einem um eine Drehachse drehbaren Rotor und mit einem um den Rotor angeordneten Stator bekannt, wobei der Stator mit Polen (11' bis 16') ausgestattet ist, von denen jeder eine einzelne Wicklung (11 bis 16) implementiert, die zusammen eine Wicklungsanordnung bildet, die zur Erzeugung eines Drehfeldes dient, ferner umfassend mindestens eine Anordnung, die etwa konzentrisch zur Drehachse angeordnet ist und eine elektrische Verbindung aufweist, voneinander isolierte Elemente (U, V, W, U ', V', W '), die mit Montageelementen (34, V1, W1, U'1, V'1, 32, 36) aneinander angeordnet sind wovon ein zugehöriges Ende einer Einzelwicklung mechanisch und elektrisch verbunden ist und eine Verbindungsanordnung umfasst, die mehrere Leiter umfasst, die jeweils mittels einer Schweißverbindung verbunden sind. An einem Ende des Stators ist ein Ring (50) angeordnet, der axiale Öffnungen für die isolierten Elemente (U, V, W, U', V', W') aufweist. Der Wicklungsdraht wird als Delta-Doppelparallelschaltung verlegt und durch Haken (34, 32 und 36) an den isolierten Elementen fixiert und anschließend mit diesen verschweißt.

Die WO 2016/124636 A1 offenbart einen Elektromotor mit einer Schalteinheit mit einer Anzahl von Kontaktdrähten und mit einem ringförmigen Rahmenteil, wobei die Kontaktdrähte zu einem Verschaltungsring für die Spulenenden einer Statorwicklung angeordnet und deren Drahtenden mit Schneid-Klemm-Kontakten verbunden sind, deren jeder zwei unter Bildung eines Schneid-Klemm-Schlitzes zueinander beabstandete Schneid-Klemm-Schenkel zum Verbinden von mindestens zwei der Drahtenden aufweist, und wobei das Rahmenteil der Schalteinheit eine der Anzahl der Schneid-Klemm-Kontakte entsprechende Anzahl von Stecktaschen zur Aufnahme der Schneid-Klemm-Kontakte aufweist.

Die JP 2012-152023 A offenbart einen Stator aus einzelnen Statorpolen/Statorkernen mit einer Isolierung. Die Statorpole werden einzeln gewickelt und danach zusammengesetzt. An der Isolierung der einzelnen Statorpole ist eine Anschlussklemmeinführungsöffnung ausgebildet, durch die der Wickeldraht verlegt wird. Dabei ist die Anschlussklemmeinführungsöffnung am Statorpol vertikal ausgerichtet. Nach der Einzelbewicklung der Statorpole und anschließendem Zusammensetzen der Statorpole wird ein weiterer Wickeldraht durch die Anschlussklemmeinführungsöffnung verlegt und eingeklemmt und der überschüssige Teil der Wicklung wird abgeschnitten. Dadurch befinden sich zwei Wickeldrähte in der Anschlussklemmeinführungsöffnung. Bei der Kontaktierung mit dem Schneidklemmkontakt wird einer der beiden Wickeldrähte geschnitten. Aufgabe der Erfindung ist es einen BLDC-Motor nach dem Innenläuferprinzip so zu verbessern, dass er bei gleichbleibender Motordrehmomentbildung und Motorausgangsleistung deutlich kompakter, leichter und kostengünstiger hergestellt werden kann oder dass bei gleichbleibendem Bauvolumen eine wesentliche Leistungssteigerung erzielt werden kann. Diese Aufgabe wird erfindungsgemäß durch die Merkmale der Ansprüche 1 und 20 gelöst. Um die ohm'schen Verluste zu minimieren ist vorgesehen, dass ein einziger Wicklungsdraht ohne Unterbrechung alle Spulen (5) der Statorwicklung (6) und Verbindungsabschnitte (8) zwischen den Spulen (5) bildet, jeder Verbindungsabschnitt (8) des Wicklungsdrahtes zwischen zwei Spulen (5) nur zwischen jeweils räumlich benachbarten Spulen (5) verläuft und eine elektrische Verbindung dieser Spulen (5) bildet und die Verbindungsabschnitte (8) zwischen zwei räumlich benachbarten Spulen (5) ausschließlich radial außerhalb der Spulen (5) in oder um Drahtumlenkmittel (37) verlegt sind. Dadurch sind keine Verbindungsdrähte über mehrere Pole zu verlegen, so dass die nicht zum Drehmoment beitragenden Drahtabschnitte minimiert werden. Es wird kein Bauraum für Drahtaufnahmen und die Verlegung der Drahtabschnitte benötigt. Dieser freiwerdende Bauraum kann für andere Funktionen genutzt werden. Der Wicklungsdraht zwischen benachbarten Spulen (5) bleibt auch im Endmontagezustand ohne Unterbrechung erhalten und ist Teil einer Wicklungsverschaltung. Auf diese Weise ist nur ein geringstmöglicher zusätzlicher Verschaltungsaufwand nötig um die gewünschte Verschaltung der Statorwicklung zu realisieren. Da der Wicklungsdraht nicht getrennt werden muss, entfällt ein zusätzlicher Verfahrensschritt. Weiter wird die Prozesssicherheit erhöht und die Möglichkeit von Kontaktfehlern verringert. Aufgrund der nicht benötigten Drahtaufnahmen bleibt mehr Bauraum für die Kontaktierung der Spulen zur Verfügung. Die Kontaktzone kann daher optimal gestaltet werden und ist für den Montageprozess besser zugänglich. Dabei weist das Isolierelement (4) radial außerhalb der Spulen (5) oder eines durch die Spulen (5) begrenzenden Umkreises (23) Aufnahmen (12) für Kontaktelemente (11) auf, wodurch ein kurzer Weg zu Kontaktmitteln gegeben ist und unnötige Drahtlängen vermieden werden. Weiter ist vorgesehen, dass die Aufnahmen (12) des Isolierelements (4) mit Öffnungen (13) zur Drahtaufnahme und/oder Drahtführung versehen sind und die Kontaktelemente (11) durch einen Steckfügevorgang in den Aufnahmen (12) fixierbar sind, wobei die distalen Kontaktabschnitte (14) in einer fügetechnisch optimalen Lage, vorzugsweise axial, ausgerichtet sind. Auf diese Weise können die Wicklungsdrähte mit hoher Genauigkeit und prozesssicher verlegt werden. Die Öffnungen (13) in den Aufnahmen dienen zusammen mit den Vorsprüngen (10) auch als Drahtumlenkmittel (37).

Weiterbildungen der Erfindung sind in den Unteransprüchen dargestellt. Dadurch, dass bei einer Mehrzahl von Verbindungsabschnitten (8) zwischen zwei räumlich benachbarten Spulen (5) der Wicklungsdraht von einer Spulenlängsseite (25) der jeweils ersten Spule zu einem Drahtumlenkmittel und von dort zu einer Spulenlängsseite (25) der jeweils zweiten Spule verläuft und die beiden Spulenlängsseiten (25) einander unmittelbar gegenüber liegen, ist ein geringstmögliche Länge des Verbindungsabschnitts (8) erreichbar.

Vorteilhaft ist es, dass die Kontaktelemente (11) Schneidklemm-Kontakte sind, welche einen distalen Kontaktabschnitt (14) und einen proximalen Kontaktabschnitt (15) aufweisen, wobei jeweils ein Verbindungsabschnitt (8) durch den proximalen Kontaktabschnitt (15) des Kontaktelements (11) unmittelbar kontaktiert ist. Proximal bedeutet nahe am Stator, distal bedeutet im vom Stator entfernten Bereich des Kontaktelements (11). Die Kontaktelemente (11) können gemäß einer alternativen Ausgestaltung der Erfindung auch als Schweißkontakte ausgebildet sein.

Um für eine bessere Prozess- und Kontaktsicherheit zu sorgen, ist vorgesehen, dass die Kontaktelemente (11) eine oder mehrere Anschlaggeometrien (38) aufweisen, welche am Isolierelement (4), insbesondere an den Aufnahmen (12) in Fügerichtung anliegen. Die Aufnahmen (12) können hierzu auch eine Gegenkontur aufweisen, z. B. Vertiefungen in einer Wandung der Aufnahmen.

Die Anschlaggeometrien (38) sind zwischen dem proximalen Kontaktabschnitt (15) und dem distalen Kontaktabschnitt (14) der achsparallel ausgerichteten Kontaktelemente (11) und außerhalb eines Kontaktbereichs (18), insbesondere außerhalb eines Schlitzbereichs (53) des proximalen Kontaktabschnitts (15) angeordnet sind. Das proximale, also dem Stator nähere Ende der Kontaktelemente (11) wird hierdurch mechanisch nicht beaufschlagt, sondern dient lediglich der Drahtaufnahme und Drahtkontaktierung.

Als zusätzliche Funktion ist weiter vorgesehen, dass eine axiale Stirnfläche des Statorjochs (2) und/oder der Statorpole (3) als Anschlag für die Verschaltungsanordnung (7) dient. Diese kann Vorsprünge, z. B. in Form von Nasen, Stiften (42) oder Plateaus aufweisen, welche an den Anschlag axial anliegen. Der Anschlag kann auch aus mehreren Anschlagkonturen (17) bestehen.

Alternativ kann auch vorgesehen sein, dass das Isolierelement (4) axiale Anschlagflächen (39) für die Verschaltungsanordnung (7), insbesondere einer Trägerstruktur (36) der Verschaltungsanordnung (7), insbesondere in Form von Nasen, Stiften (42) oder Plateaus, aufweist, wobei das Isolierelement (4) um den Stator (1) montiert oder urgeformt ist.

Um den Bauraum möglichst gering zu halten ist vorgesehenen, dass der Wicklungsdraht in axialer Richtung maximal um bis zu 5 mm, insbesondere bis zu 4 mm, insbesondere bis zu 3 mm, insbesondere bis zu 2 mm, insbesondere bis zu 1 mm über den Stator (1) und/oder das Isolierelement (4) radial hinausragt.

Ein geringer axialer Bauraum wird insbesondere dadurch erreicht, dass sich zumindest zwei von drei Raumbereichen (R1, R2, R3) axial überlappen welche jeweils durch Normalen-Ebenen zu einer Rotordrehachse axial begrenzt sind, wobei der erste Raumbereich (R1) einerseits axial durch das proximale Ende der Kontaktelemente (11) und andererseits durch das distale Ende eines Kontaktbereichs zwischen den Kontaktelementen (11) und den Verbindungsabschnitten (8) des Wicklungsdrahtes begrenzt ist, der zweite Raumbereich (R2) durch einen Wicklungskopf begrenzt ist, wobei der Wicklungskopf als Teil-Volumenbereich der Spulen mit zu einer Rotordrehachse nichtparallelen Draht-Abschnitten axial außerhalb des Statorjochs definiert ist und der dritte Raumbereich (R3) axial von den Kugellagerstirnseiten begrenzt ist.

Vorzugsweise sollten sich alle drei Raumbereiche (R1, R2, R3) axial überlappen, so dass sie zumindest eine gemeinsame Normalen-Ebene aufweisen.

Einen noch geringeren Bauraum kann man erzielen, wenn sich zumindest drei von vier Raumbereichen (R1, R2, R3, R4) axial überlappen welche jeweils durch Normalen-Ebenen zu einer Rotordrehachse axial begrenzt sind, wobei der erste Raumbereich (R1) einerseits axial durch das proximale Ende der Kontaktelemente (11) und andererseits durch das distale Ende eines Kontaktbereichs zwischen den Kontaktelementen (11) und den Verbindungsabschnitten (8) des Wicklungsdrahtes begrenzt ist, der zweite Raumbereich (R2) durch einen Wicklungskopf begrenzt ist, wobei der Wicklungskopf als Teil-Volumenbereich der Spulen mit zu einer Rotordrehachse nichtparallelen Draht-Abschnitten axial außerhalb des Statorjochs definiert ist, der dritte Raumbereich (R3) axial von einer ersten proximalen Kugellagerstirnseite (44) und einer zweiten distalen Kugellagerstirnseite (45) begrenzt ist und der vierte Raumbereich (R4) von einem proximalen Endbereich einer Trägerstruktur (36), der Verschaltungsanordnung (7) begrenzt ist.

Insbesondere ist vorgesehen, dass der proximale Endbereich (51) durch eine dem Stator (1) zugewandte Endfläche der Verschaltungseinheit (7) definiert ist, welche sich im Wesentlichen in einer Normalenebene zur Rotordrehachse (40) und radial zumindest teilweise über einen Bereich zwischen dem Kugellager (41) und dem Wicklungskopf (48) erstreckt.

Alternativ ist vorgesehen, dass der proximale Endbereich (51) durch eine Nase, einen Stift (42) oder ein Plateau der Verschaltungsanordnung (7) begrenzt ist, welcher axial am Stator (1), insbesondere am Statorjoch (2) oder am Isolierelement (4) anliegt.

Vorzugsweise sollten sich alle vier vier Raumbereichen (R1, R2, R3, R4) sich axial überlappen, so dass sie zumindest eine gemeinsame Normalen-Ebene aufweisen.

Die genannten Vorteile lassen sich vor allem bei Verwendung eines Wicklungsdrahts mit einem Drahtdurchmesser zwischen 0,2 mm und 2,4 mm, insbesondere die Drahtdurchmesser 0,425mm, 0,45mm, 0,475mm, 0,5mm, 0,53mm 0,56mm, 0,6mm, 0,63mm, 0,67mm, 0,71mm, 0,75mm, 0,8mm, 0,85mm, und 0,9mm, oder AWG 19, AWG 20, AWG 21, AWG 22, AWG 23, AWG 24, AWG 25, AWG 26 erzielen.

Bei einer besonders vorteilhaften Weiterbildung der Erfindung ist vorgesehen, dass der Stator (1) mit einer dreiphasigen Parallelwicklung bewickelt und verschaltet ist. Ebenso kann der Stator (1) auch mit einer fünfphasigen Parallelwicklung oder einer bipolaren einphasigen Wicklung bewickelt und verschaltet sein. Durch eine Parallelwicklung kann ein deutlich geringerer Drahtdurchmesser gewählt werden. Dies hat zum einen zur Folge, dass die Wicklung den Wickelraum exakter und vollständiger ausfüllt und zum anderen kann dadurch die Wickelnadel eine kleinere Breite aufweisen. Eine dünnere Wickelnadel erlaubt engere Spaltmaße zwischen zwei Polschuhen und einen größeren bewickelbaren Nutquerschnitt. Diese Maßnahme erlaubt den Stator (1) und den Motor kleiner zu bauen. Auch die Rotordynamik kann aufgrund eines kürzeren Rotors und damit eines geringeren Massenträgheitsmoments verbessert werden. Andererseits kann bei gleicher Baugröße ein größeres Drehmoment erreicht werden.

Die drei Phasen der Statorwicklung (6) sind bevorzugt durch Leitbleche (16) kontaktiert und verschaltet, wobei die Leitbleche (16) mit proximalen Kontaktabschnitten (15) einstückig oder durch Schweißen mit den Leitblechen (16) verbunden sind. Alternativ zu Leitblechen (16) können die drei Phasen der Statorwicklung (6) auch durch eine Leiterplatte (20) miteinander verschaltet sein. Leiterplatten (20) sind prozesssicher herzustellen und können mit hoher Genauigkeit montiert werden. Vorzugsweise werden Einpresskontakte verwendet, die einen Kontaktabschnitt (14) der Kontaktelemente (11) bilden und in der Leiterplatte (20) eingepresst sind.

Es ist montagetechnisch sinnvoll, dass die distalen Kontaktabschnitte (14) der Kontaktelemente (11) in der Leiterplatte (20) eingepresst sind.

In vielen Anwendungen sind die bürstenlosen Motoren hohen Umwelt- und Vibrationsbelastungen ausgesetzt. Für derartige Fälle wird der bewickelte Stator (1) und die Kontaktelemente (11) und/oder die Verschaltungsanordnung (7) mit Kunststoffmaterial umspritzt. Auf diese Weise können sich die Kontakte nicht lösen, wodurch sich die Lebensdauer erhöht.

Eine weitere Möglichkeit vibrationsbedingte Ausfälle zu vermeiden besteht darin, dass vor dem Stecken der Kontakte die Taschen mit zähelastischem, ölbeständigen Material ausgegossen werden. Die Ölbeständigkeit erlaubt den Einsatz als Ölpumpenmotor.

Alternativ oder zusätzlich können die Aufnahmen (12) nach der Kontaktierung mit Gel ausgegossen werden.

Der beschriebene bürstenlose Motor eignet sich insbesondere für Pumpenmotoren, z. B. Ölpumpenmotoren, da diese häufig besonders hohe Anforderungen an ihre Kompaktheit erfüllen müssen.

Die Erfindung wird nachfolgend anhand von Ausführungsbeispielen näher erläutert. Es zeigen:
Fig. 1 Wickelschema einer Reihenschaltung nach dem Stand der Technik,
Fig. 2 eine Ansicht eines bekannten dreiphasigen Stators,
Fig. 3 eine Parallelwicklung gemäß dem Stand der Technik,
Fig. 4 eine äquivalente Reihenwicklung gemäß dem Stand der Technik,
Fig. 5a ein Wickelschema einer Parallelschaltung nach dem Stand der Technik,
Fig. 5b ein verschaltetes Wickelschema gemäß Fig. 5a,
Fig. 6 eine erste Ausführungsform eines Stators des bürstenlosen Motors,
Fig. 7 eine weitere Darstellung der ersten Ausführungsform,
Fig. 8 eine vergrößerte Darstellung der ersten Ausführungsform,
Fig. 9 eine um eine Verschaltungsanordnung in Form einer Leiterplatte ergänzte Darstellung der ersten Ausführungsform,
Fig. 10 eine zweite Ausführungsform des Stators mit Kontaktelementen,
Fig. 11 eine weitere Darstellung der zweiten Ausführungsform,
Fig. 12 eine erste Variante der zweiten Ausführungsform,
Fig. 13 eine erste Ausführungsform eines Leitblechs,
Fig. 14 zwei Ausführungen eines Brückenglieds mit Kontaktabschnitt,
Fig. 15 die erste Ausführungsform des Leitblechs mit Kunststoffumspritzung,
Fig. 16 eine zweite Ausführungsform einer Verschaltungsanordnung mit einer zweiten Ausführungsform eines Leitblechs,
Fig. 17 eine Darstellung der Kontaktierung des Stators durch Leitbleche,
Fig. 18 eine alternative Ausführungsform eines Kontaktelements,
Fig. 19 eine Darstellung der axialen Anordnung unterschiedlicher Bereiche und
Fig. 20 eine Darstellung eines Kontaktbereichs.

Hinweis: Bezugszeichen mit Index und entsprechende Bezugszeichen ohne Index bezeichnen namensgleiche Einzelheiten in den Zeichnungen und der Zeichnungsbeschreibung. Es handelt sich dabei um die Verwendung in einer anderen Ausführungsform, dem Stand der Technik und/oder die Einzelheit ist eine Variante. Die Ansprüche, die Beschreibungseinleitung, die Bezugszeichenliste und die Zusammenfassung enthalten der Einfachheit halber nur Bezugszeichen ohne Index.

Fig. 1 zeigt ein Wickelschema einer Reihenschaltung nach dem Stand der Technik, wobei die Wicklung durchgehend mit einem einzigen Wicklungsdraht gewickelt ist. Wie deutlich zu erkennen ist, wird bei allen Phasen A, B, C zunächst ein erster Pol umwickelt, dann zwei Pole freigelassen, der nächste Pol bewickelt, zwei Pole freigelassen und der letzte Pol bewickelt. Bei den folgenden Phasen B, C wird lediglich die Startposition verschoben, ansonsten ist die Bewicklung analog zu Phase A ausgeführt. Brücken-Drahtabschnitte 26 zwischen den Wicklungsdrähten erhöhen die ohm'schen Verluste und tragen nichts zur Erhöhung des Drehmoments bei. Da die Windungszahlen bei Reihenschaltungen häufig im einstelligen Bereich liegen, erhöhen sich die Wicklungswiderstände teilweise um mehr als 10%. Das Leistungsvermögen des Motors geht daher um den gleichen Faktor zurück. Bei der Parallelschaltung erhöht sich der Wicklungswiderstand dagegen nur um ca. 1-2%, weil die Windungszahl höher und die Verbindungsabschnitte kürzer sind. Der große Drahtdurchmesser bei einer Reihenschaltung hat zusätzlich den Nachteil, dass die Brücken-Drahtabschnitte 26 der Drahtwicklung einen erhöhten Platzbedarf außerhalb des Spulenraums im Jochbereich des Stators haben. Anwendungen, bei welchem der Stator in ein Gehäuse eingezogen werden muss erfordern zusätzlich Platz für ein Montagewerkzeug. Aus diesem Grund kann es vorkommen, dass der Statordurchmesser erweitert werden muss.

Fig. 2 zeigt eine zweite Ansicht des bekannten dreiphasigen Stators mit bis zu vier axial voneinander getrennten Brücken-Drahtabschnitten 26. Die zusätzlich erforderlichen Brücken-Drahtabschnitte 26 erhöhen den ohm'schen Widerstand und verringern damit den Wirkungsgrad. Die vier Brücken-Drahtabschnitte führen auch zu einer Verlängerung des Motors. Ein weiterer Nachteil besteht darin, dass für die Kontaktierung wertvoller Bauraum verloren geht. Gleiches gilt für die Anordnung von Verbindungsgeometrien mit einer Verschaltungsanordnung.

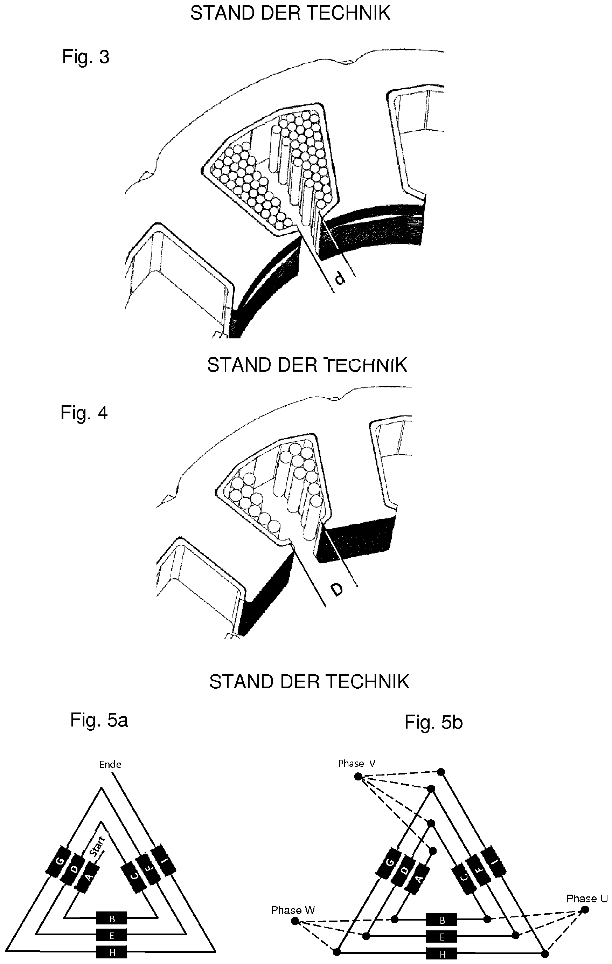

Fig. 3 zeigt eine bekannte Parallelwicklung und Fig. 4 eine bekannte äquivalente Reihenwicklung, wobei deutlich die unterschiedlichen Drahtdurchmesser und Windungszahlen zu erkennen sind. Die Parallelwicklung lässt sich aufgrund des geringeren Drahtdurchmessers genauer an die Nut anpassen als die Reihenwicklung. Hieraus resultieren ein höherer Kupferfüllfaktor und damit ein höherer Wirkungsgrad. Der Drahtdurchmesser beeinflusst auch die Breite einer Wickelnadel, diese entspricht etwa dem dreifachen nominalen Drahtdurchmesser. Der Freiraum, welcher für die Wickelnadel vorgehalten werden muss, lässt sich nicht als Wickelraum nutzen. Dies ist ein weiterer Vorteil der Parallelwicklung. Zudem kann der Abstand der Pole oder der einander gegenüberliegenden Polschuhe kleiner gewählt werden. Abstand d der Parallelschaltung ist deutlich geringer als Abstand D der Reihenschaltung. Hierdurch wird zusätzlich die Polfühligkeit oder das Rastmoment verringert. Die insgesamt in die Nuten eingebrachte Kupfermenge erhöht sich bei einer Parallelwicklung gegenüber einer Reihenwicklung um ca. den Faktor 1,6. Dadurch können die Motoren entsprechend höheres Drehmoment abgeben oder bei gleichem Drehmoment kleiner gebaut werden. Hierdurch kann das Gewicht verkleinert und die Wirtschaftlichkeit erhöht werden. Es ist z. B. möglich den Motor zu verkürzen, wodurch auch die Rotorlänge und damit die Massenträgheit verringert werden kann. Ein weiterer Vorteil der Parallelwicklung liegt darin begründet, dass der Wicklungswiderstand der Einzelspulen höher ist als bei einer Reihenschaltung. Hierdurch sind Übergangswiderstände an Kontaktstellen im Verhältnis zum Wicklungswiderstand unkritischer.

Fig. 5a zeigt ein Wickelschema einer Parallelschaltung nach dem Stand der Technik, wobei ohne abzusetzen von Spule zu Spule gewickelt wird. Die Länge des Verbindungsdrahtabschnittes kann daher sehr gering gehalten werden. Fig. 5b zeigt ein verschaltetes Wickelschema gemäß Fig. 5a.

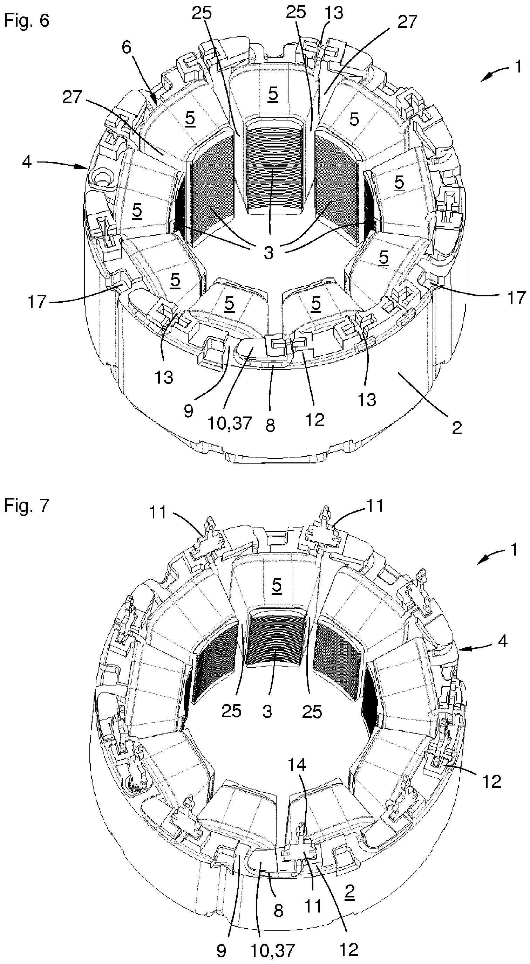

Fig. 6 zeigt eine erste Ausführungsform eines Stators 1 des bürstenlosen Motors, mit neun Statorpolen 3, welche von einem Statorjoch 2 ausgehend nach innen gerichtet sind. Jeder Statorpol 3 ist mit einer Spule 5 bewickelt. Alle Spulen 5 zusammen bilden eine Statorwicklung 6. In Umfangsrichtung verbleibt zwischen den Spulen 5 jeweils ein Freiraum 27 für eine Wickelnadel. Der Stator 1 besteht hier aus einem Blechstapel. An beiden Stirnseiten des Blechstapels befindet sich ein Isolierelement 4. Eines der Isolierelemente 4 weist Aufnahmen 12 für Kontaktelemente auf. Eine Öffnung 13 in den Aufnahmen 12 erlaubt die Durchführung eines Verbindungsabschnitts 8 eines Wicklungsdrahtes zwischen zwei Spulen 5. Der Verbindungsabschnitt 8 zwischen zwei räumlich benachbarten Spulen 5 verläuft hier jeweils von einer Spulenlängsseite 25 der jeweils ersten Spule zu einer der Aufnahmen 12 und von dort zu einer Spulenlängsseite 25 der jeweils zweiten Spule, wobei die beiden Spulenlängsseiten 25 einander unmittelbar gegenüber liegen. Auf dem Isolierelement 4 verläuft der Verbindungsabschnitt 8 durch eine Ausnehmung 9 oder Vertiefung und um einen Vorsprung 10 (allgemein: Drahtumlenkmittel 37) herum und anschließend durch die Aufnahme 12. Die Aufnahme 12 ist so angeordnet, dass der Wicklungsdraht nicht in den Freiraum 27 verlegt werden kann. Weiter sind axiale Anschlagkonturen 17 gezeigt, welche als Anschlag für Stifte, Nasen oder Plateaus einer Verschaltungsanordnung dienen. Diese Anschlagkonturen 17 sind Bereiche des Statorjochs 2.

Fig. 7 zeigt eine weitere Darstellung der ersten Ausführungsform des Stators 1 dem Statorjoch 2, den Statorpolen 3, den Spulen 5 mit ihren Spulenlängsseiten 25, den Verbindungsabschnitten 8 des Wicklungsdrahtes, den Aufnahmen 12, den Ausnehmungen 9 und den Vorsprüngen 10 (allgemein: Drahtumlenkmittel 37) im Isolierelement 4 und Kontaktelementen 11, welche einen distalen Kontaktabschnitt 14 und hier nicht erkennbare proximale Kontaktabschnitte 15 aufweisen. Unter "distalem Kontaktabschnitt" ist der Teil des Kontaktelements 11 zu verstehen, welcher vom Stator 1 entfernter ist als der "proximale Kontaktabschnitt"; dieser ist näher am Stator 1 angeordnet.

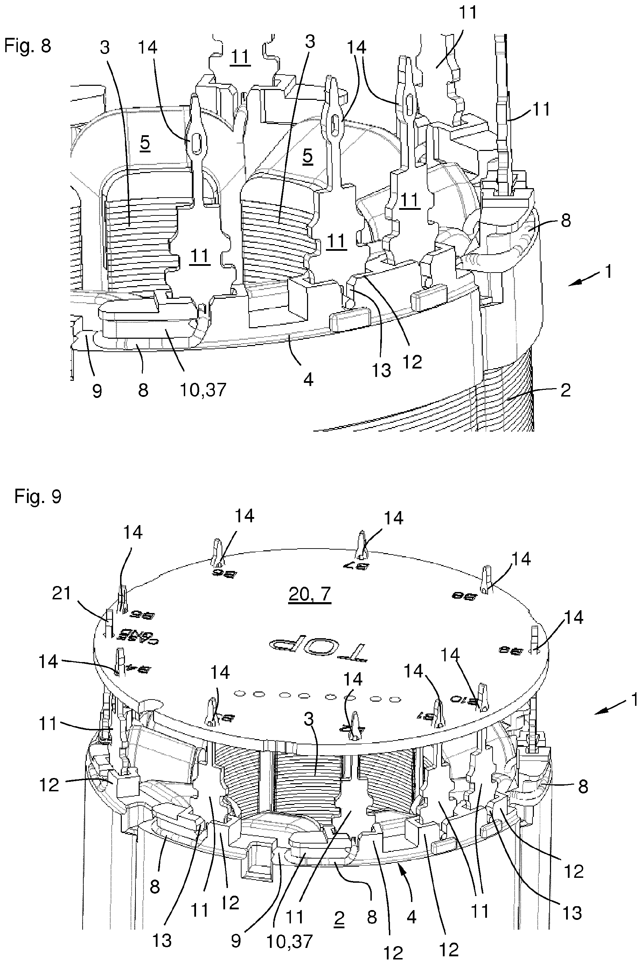

Fig. 8 zeigt eine vergrößerte Darstellung der ersten Ausführungsform des Stators 1, mit dem Statorjoch 2, den Statorpolen 3, dem Isolierelement 4, den Aufnahmen 12, den Öffnungen 13, den Ausnehmungen 9, den Vorsprüngen 10 (allgemein: Drahtumlenkmittel 37), den Kontaktelementen 11 mit den distalen Kontaktabschnitten 14 und den Verbindungsabschnitten 8 des Wicklungsdrahtes.

Fig. 9 zeigt eine um eine Verschaltungsanordnung 7 in Form einer Leiterplatte 20 ergänzte Darstellung der ersten Ausführungsform des Stators 1, mit dem Statorjoch 2, den Statorpolen 3, dem Isolierelement 4, den Aufnahmen 12, den Öffnungen 13, den Ausnehmungen 9, den Vorsprüngen 10 (allgemein: Drahtumlenkmittel 37), den Kontaktelementen 11 mit den distalen Kontaktabschnitten 14, den Verbindungsabschnitten 8 des Wicklungsdrahtes und einem Massekontakt 21. Auf der Leiterplatte 20 sind Leiterbahnen so angeordnet, dass die gewünschte Verschaltung der Spulen 5 zustande kommt.

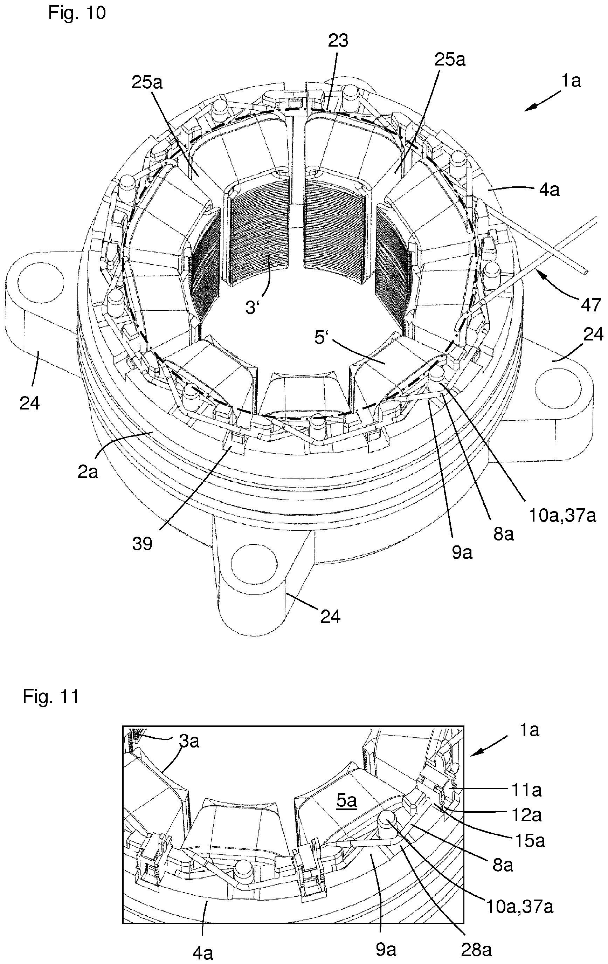

Fig. 10 zeigt eine zweite Ausführungsform des Stators 1a, wobei der Unterschied zur ersten Ausführungsform darin besteht, dass bei einer Mehrzahl von Verbindungsabschnitten 8a zwischen zwei räumlich benachbarten Spulen 5a von einer Spulenlängsseite 25a der jeweils ersten Spule zu einem der Vorsprünge 10a (allgemein: Drahtumlenkmittel 37) und von dort zu einer Spulenlängsseite 25a der jeweils zweiten Spule 5a verläuft und die beiden Spulenlängsseiten 25a diejenigen sind, die den größten Abstand voneinander haben. Weiter zeigt Fig. 10 mehrere Anschraubaugen 24, die Bestandteil eines Statorjochs 2a sind und Ausnehmungen 9a zur Aufnahme der Verbindungsabschnitte 8a des Wicklungsdrahts 47, Statorpole 3a und ein Isolierelement 4a. Die Spulen 5a befinden sich radial innerhalb eines Umkreises 23 und die Verbindungsabschnitte 8a befinden sich radial außerhalb des Umkreises 23. Das Isolierelement 4a weist axiale Anschlagflächen 39 auf, welche alternativ als Anschlagflächen für eine Verschaltungsanordnung dienen können.

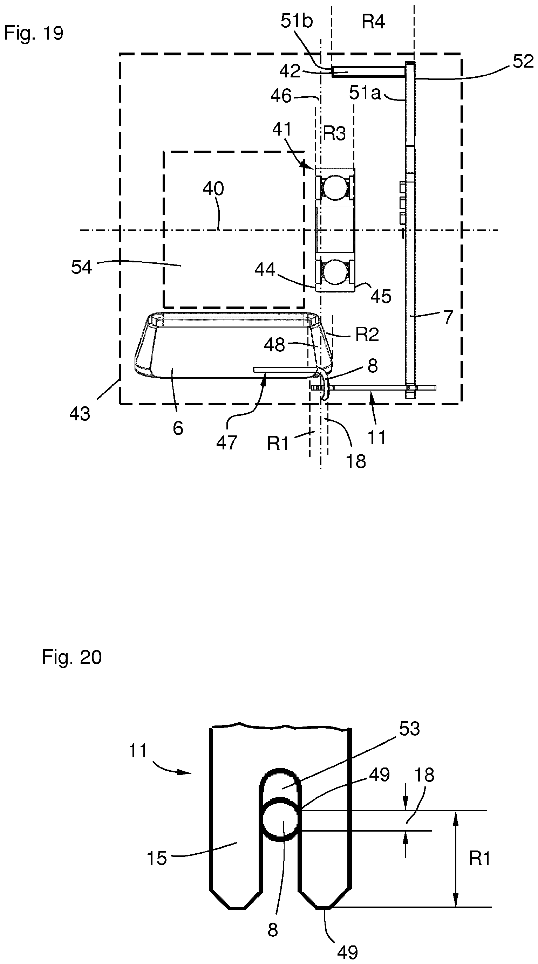

Fig. 11 zeigt eine weitere Darstellung der zweiten Ausführungsform des Stators 1a, mit dem Statorjoch 2a, den Statorpolen 3a, dem Isolierelement 4a, den Spulen 5a, den Ausnehmungen 9a, den Vorsprüngen 10a (allgemein: Drahtumlenkmittel 37), Aufnahmen 12a und ein Kontaktelement 11a, welches zwei proximale Kontaktabschnitte 15a aufweist. Die Verbindungsabschnitte 8a verlaufen überkreuz, haben jedoch einen geringen Abstand voneinander. Der Abstand wird durch die Tiefe der Ausnehmungen 9a und die Höhe von sekundären Vorsprüngen 28a auf dem Isolierelement 4a definiert. Die Lage der Kontaktelemente 11a ist so zu wählen, dass der Draht gut verlegbar ist und die Kontaktelemente 11a sich gut umspritzen lassen. Deshalb sind die Kontaktelemente 11a bevorzugt parallel zur Rotordrehachse 40 (siehe Fig. 19) ausgerichtet.

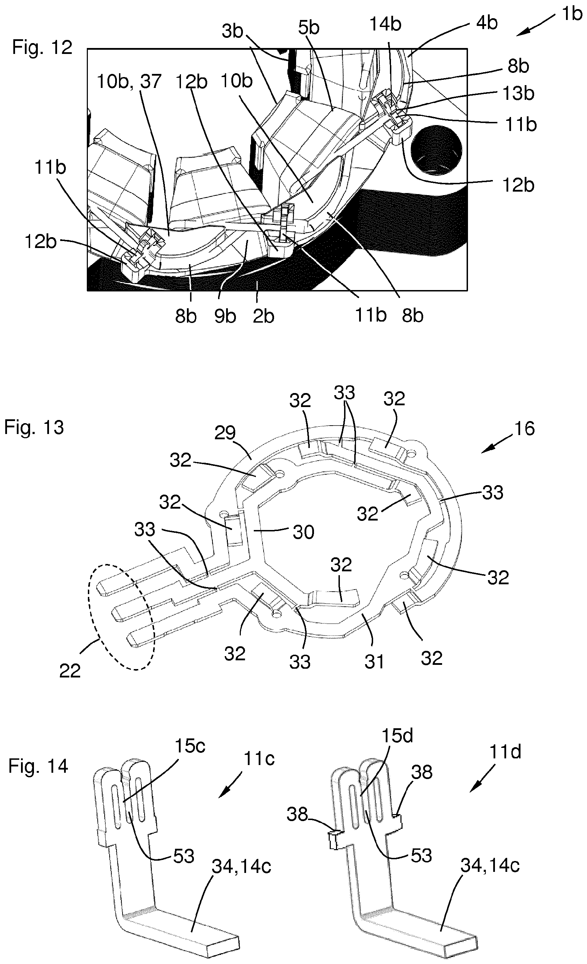

Fig. 12 zeigt eine erste Variante der zweiten Ausführungsform, mit einem Stator 1b, einem Statorjoch 2b, Statorpolen 3b, einem Isolierelement 4b, Spulen 5b, Verbindungsabschnitten 8b des Wicklungsdrahtes, Ausnehmungen 9b, Vorsprüngen 10b, Kontaktelementen 11b, Aufnahmen 12b und Öffnungen 13b. Die Kontaktelemente 11b weisen hier nur einen proximalen Kontaktabschnitt 15 in Form einer Schneidklemm-Kontur auf und sind schräg zu einer Radialen angeordnet. Die Vorsprünge 10b (allgemein: Drahtumlenkmittel 37) sind bogenförmig ausgeführt. Die Ausnehmungen 9b weisen entsprechend einer schiefen Ebene von der Spule 5b ausgehend bis zur Aufnahme 12b eine ansteigende Höhe auf, so dass der Wicklungsdraht auf der gegenüberliegenden Seite der Aufnahme 12b über den Verbindungsabschnitt 8b des benachbarten Spulenpaars verläuft, wobei sich beide Abschnitte kreuzen, aber nicht berühren.

Fig. 13 zeigt eine erste Ausführungsform eines Leitblechs 16, das ein wesentlicher Bestandteil einer Verschaltungsanordnung ist. Das Leitblech 16 umfasst drei Anschlüsse 22, welche jeweils mit bogenförmigen Verbindungleitern 29, 30, 31 einstückig sind. Jeder Verbindungsleiter 29, 30, 31 weist hier drei

Anschlussabschnitte 32 auf, welche gegenüber den Verbindungsleitern 29, 30, 31 gekröpft sind. Die Verbindungsleiter 29, 30, 31 sind über Stege 33 miteinander verbunden, welche zur einfacheren Handhabung im Fertigungsprozess dienen. Diese Stege 33 werden nach einem Umspritzvorgang zerschnitten oder ausgestanzt, so dass die drei Verbindungsleiter 29, 30, 31 galvanisch voneinander getrennt sind. Die Verbindungsleiter 29, 30, 31 sind im Wesentlichen konzentrisch zueinander angeordnet.

Fig. 14 zeigt in vergrößerter Darstellung zwei einzelnes Kontaktelement 11c, 11d mit einem Brückenglied 34 mit proximalem Kontaktabschnitt 15c, welcher eine Schneidklemmkontur aufweist. Zusammen bilden Brückenglied 34 und Kontaktabschnitt 15c, bzw. 15d das Kontaktelement 11c bzw. 11d. Das Brückenglied 34 dient zur Überbrückung eines Verbindungsleiters des Leitblechs 16 (Fig. 13), ohne diesen zu berühren. Das Brückenglied 34 ist mit dem Anschlussabschnitt 32 des Leitblechs 16 verschweißbar. Das Kontaktelement 11d weist im Gegensatz zu Kontaktelement 11c zusätzliche Anschlaggeometrien 38 auf. Diese dienen als Anschlag am Isolierelement, insbesondere an einer Aufnahme für das Kontaktelement. Die Anschlaggeometrien 38 sind durch einfaches Durchstanzen, z.B. von Stegen zwischen mehreren Kontaktelementen eines Kontaktbands herstellbar, wobei ein Teil der Stege am Kontaktelement verbleibt und die Anschlaggeomeetrien 38 bilden. Die Brückenglieder 34 bilden an ihrem Ende die distalen Kontaktabschnitte 14c in Form von Schweißkontakten. Die Anschlaggeometrien 38 sind zwischen distalem Kontaktabschnitt 15c bzw. 15d und proximalem Kontaktabschnitt 14c und außerhalb eines Schlitzbereichs 53 angeordnet.

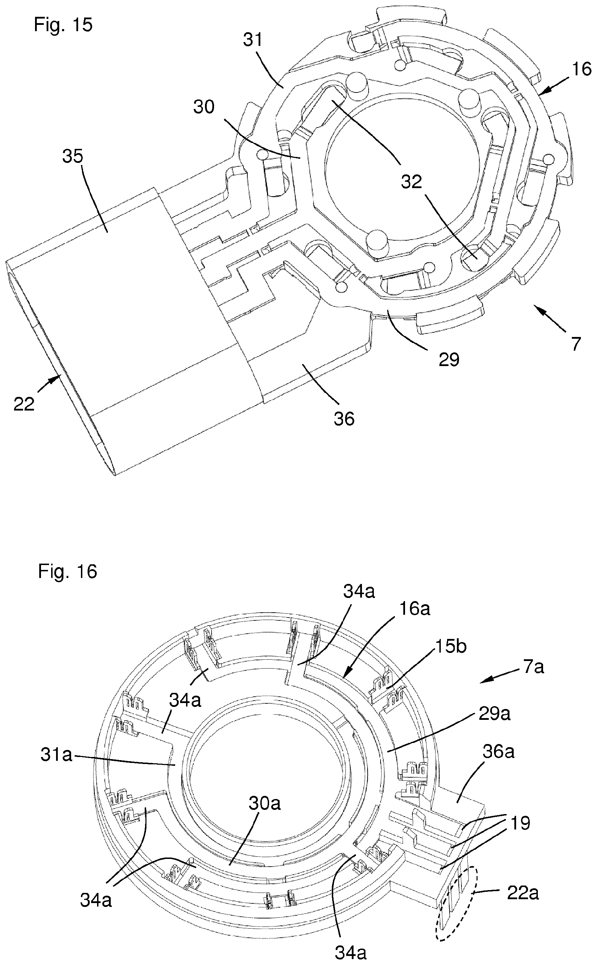

Fig. 15 zeigt eine erste Ausführungsform einer Verschaltungsanordnung 7 mit dem Leitblech 16, den Anschlüssen 22 (verdeckt), dem ersten Verbindungsleiter 29, dem zweiten Verbindungsleiter 30, dem dritten Verbindungsleiter 31, den Stegen 33 und den Anschlussabschnitten 32, einem Steckergehäuse 35 und einer Trägerstruktur 36. Die Stege 33 sind nach dem Umspritzen überflüssig und werden vor einer Montage im Motor durchtrennt.

Fig. 16 zeigt eine zweite Ausführungsform einer Verschaltungsanordnung 7a mit einer zweiten Ausführungsform eines Leitblechs 16a, bestehend aus einem ersten bogenförmigen Verbindungsleiter 29a, einem zweiten bogenförmigen Verbindungsleiter 30a und einem dritten bogenförmigen Verbindungsleiter 31a, wobei die Verbindungsleiter 29a, 30a, 31a jeweils mehrere mit den diesen einstückigen Brückengliedern 34a aufweisen, welche sich radial nach außen erstrecken. Weiter sind die Verbindungsleiter 29a, 30a, 31a einstückig mit Anschlüssen 22a, welche hier gegenüber den Verbindungsleitern 29a, 30a, 31a rechtwinklig abgewinkelt sind. Das Leitblech 16a ist in einem Träger 36a eingebettet. Die Brückenglieder 34a queren mit geringem Abstand benachbarte Verbindungsleiter, hierfür sind die Verbindungsleiter in unterschiedlichen Höhenniveaus angeordnet. Die Verbindungsleiter 29a, 30a, 31a sind jeweils mit ihren einstückigen Brückengliedern 34a bis zu Biegekanten 19 in einer Ebene angeordnet; die Anschlüsse 22a sind entsprechend unterschiedlich lang. An die Brückenglieder 34a schließen sich jeweils zwei proximale Kontaktabschnitte 15b an, welche von den Seitenkanten der Brückenglieder 34a abgewinkelt sind und eine Schneid-Klemm-Kontur aufweisen.

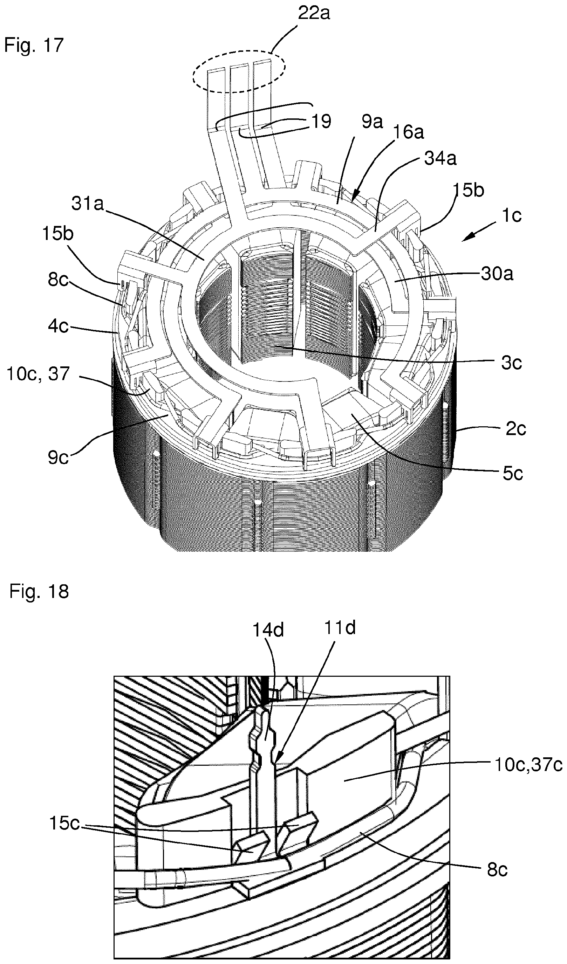

Fig. 17 zeigt die zweite Ausführungsform eines Stators 1c, mit einem Statorjoch 2c, Statorpolen 3c, Spulen 5c, Verbindungsabschnitte 8c des Wicklungsdrahtes, einem Isolierelement 4c, mit Vorsprüngen 10c (allgemein: Drahtumlenkmittel 37) und Ausnehmungen 9c, dem Leitblech 16a, mit den Biegekanten 19 und den Anschlüssen 22a. Eine Trägerstruktur ist der Übersichtlichkeit halber nicht dargestellt. Das Leitblech 16a umfasst die Verbindungsleiter 29a, 30a und 31a mit den Brückengliedern 34a und den proximalen Kontaktabschnitten 15b die als Schneid-Klemm-Kontaktaschnitte ausgebildet sind.

Fig. 18 zeigt eine weitere Ausführungsform eines Kontaktelements 11d, das mit Kontakthaken als proximale Kontaktabschnitte 15c einstückig ist und einen distalen Kontaktabschnitt 14c aufweist, welches als Einpresskontakt ausgebildet ist. Weiter ist ein Vorsprung 10c (allgemein: Drahtumlenkmittel 37) und ein Verbindungsabschnitt 8c zu erkennen. Die Kontakthaken können zur Verschweißung oder zur Verklemmung des Verbindungsabschnitts 8c dienen.

Fig. 19 zeigt eine Darstellung der axialen Anordnung unterschiedlicher Raumbereiche R1, R2, R3 und R4. Der erste Raumbereich R1 ist einerseits durch das distale Ende 49 eines Kontaktelements 11 und andererseits durch den Kontaktbereich 18 zwischen einem Verbindungsabschnitt 8 des Wicklungsdrahtes 47 mit dem Kontaktelement 11 definiert. Der zweite Raumbereich R2 ist durch den Beginn und das distale Ende des Wicklungskopfs 48 definiert, wobei der Wicklungskopf 48 dort beginnt, wo der Wicklungsdraht 48 eine von einer Achsparallelen Richtung abweichende Lage einnimmt. Der dritte Raumbereich R3 ist durch eine erste proximale Stirnseite 44 und eine zweite distale Stirnseite 45 eines Kugellagers 41 begrenzt. Und der vierte Raumbereich R4 ist durch einen proximalen Endbereich 51a oder 51b, und einem distalen Ende 52 der Verschaltungsanordnung (7) begrenzt. Der Endbereich 51a erstreckt sich in einer Normalenebene zur Rotordrehachse 40 und radial zumindest teilweise über einen Bereich zwischen dem Kugellager 41 und dem Wicklungskopf 48.Der Endbereich 51b ist durch das proximale Ende eines Stifts 42 definiert, welcher mit dem Verschaltungselement 7 einstückig ist. In Fig. 19 überlappen sich die drei Raumbereiche R1, R2 und R3 so, dass sich alle mit einer gedachten Normalenebene 46 schneiden. Ein Gehäuse 43 und ein Rotor 54 sind durch Strichlinien angedeutet.

Fig. 20 zeigt einen Kontaktbereich 18 zwischen einem proximalen Kontaktabschnitt 15 eines Kontaktelements 11 und einem Verbindungsabschnitt 8 des Wicklungsdrahts. Der Kontaktbereich 18 ist derjenige Bereich innerhalb eines Schlitzbereichs 53, an welchem galvanischer Kontakt besteht. Dieser Bereich ist in der Regel kleiner als der Durchmesser des Wicklungsdrahts. Zur Verdeutlichung sind hier die axialen Grenzen und die axiale Ausdehnung des Raumbereichs R1 nochmals dargestellt, wobei diese Grenzen einerseits durch ein proximales Ende 49 des Kontaktelements 11 und andererseits durch das distale Ende 50 des Kontaktbereichs 18 definiert sind.

**Bezugszeichenliste**

| | | | |
|---|---|---|---|
| 1 | Stator | 29 | erster Verbindungsleiter |
| 2 | Statorjoch | 30 | zweiter Verbindungsleiter |
| 3 | Statorpol | 31 | dritter Verbindungsleiter |
| 4 | Isolierelement | 32 | Anschlussabschnitt |
| 5 | Spule | 33 | Steg |
| 6 | Statorwicklung | 34 | Brückenglied |
| 7 | Verschaltungsanordnung | 35 | Steckergehäuse |
| 8 | Verbindungsabschnitt | 36 | Trägerstruktur |
| 9 | Ausnehmung | 37 | Drahtumlenkmittel |
| 10 | Vorsprung | 38 | Anschlaggeometrie (Kont.) |
| 11 | Kontaktelement | 39 | Axiale Anschlagfläche (Isol.) |
| 12 | Aufnahme | 40 | Rotordrehachse |
| 13 | Öffnung | 41 | Kugellager |
| 14 | distaler Kontaktabschnitt | 42 | Stift |
| 15 | proximaler Kontaktabschnitt | 43 | Gehäuse |
| 16 | Leitblech | 44 | erste Kugellagerstirnseite |
| 17 | axiale Anschlagkontur (Joch) | 45 | zweite Kugellagerstirnseite |
| 18 | Kontaktbereich | 46 | Normalenebene |
| 19 | Biegekante | 47 | Wicklungsdraht |
| 20 | Leiterplatte | 48 | Wicklungskopf |
| 21 | Massekontakt | 49 | proximales Ende |
| 22 | Anschluss | 50 | distales Ende |
| 23 | Umkreis | 51 | proximaler Endbereich |
| 24 | Anschraubaugen | 52 | distaler Endbereich |
| 25 | Spulenlängsseite | 53 | Schlitzbereich |
| 26 | Brücken-Drahtabschnitt | 54 | Rotor |
| 27 | Freiraum | | |
| 28 | Sekundärer Vorsprung | | |

## Patentansprüche

1. Bürstenloser Motor mit einem in einem Kugellager (41) gelagerten Permanentmagnetrotor und einem bewickelten Stator (1), bestehend aus einem Statorjoch (2) mit einer Mehrzahl von Statorpolen (3), einem stirnseitig angeordneten Isolierelement (4), einer eine Mehrzahl von Spulen (5) umfassende Statorwicklung (6), wobei jeder Statorpol (3) mit einer Spule (5) bewickelt ist, einer Verschaltungsanordnung (7) zum Verschalten der Spulen (5) miteinander und mit elektrischen Anschlüssen (22), wobei ein einziger Wicklungsdraht (47) ohne Unterbrechung alle Spulen (5) der Statorwicklung (6) und Verbindungsabschnitte (8) zwischen den Spulen (5) bildet, jeder Verbindungsabschnitt (8) des Wicklungsdrahtes zwischen zwei Spulen (5) nur zwischen jeweils räumlich benachbarten Spulen (5) verläuft und eine elektrische Verbindung dieser Spulen (5) bildet, wobei die Verbindungsabschnitte (8) zwischen zwei räumlich benachbarten Spulen (5) ausschließlich radial außerhalb der Spulen (5) auf dem Isolierelement (4) durch eine Ausnehmung (9) oder Vertiefung und in oder um Drahtumlenkmittel (37) und anschließend durch Aufnahmen (12) verlegt sind, der Wicklungsdraht (47) zwischen benachbarten Spulen (5) im Endmontagezustand ohne Unterbrechung erhalten bleibt und Teil einer Wicklungsverschaltung ist, wobei das Isolierelement (4) radial außerhalb der Spulen (5) oder eines durch die Spulen (5) begrenzenden Umkreises (23) die Aufnahmen (12) für Kontaktelemente (11) aufweist, **dadurch gekennzeichnet, dass** die Aufnahmen (12) des Isolierelements (4) mit Öffnungen (13) zur Drahtaufnahme und/oder Drahtführung versehen sind und die Kontaktelemente (11) durch einen Steckfügevorgang in den Aufnahmen (12) fixierbar sind, wobei distale Kontaktabschnitte (14) in einer fügetechnisch optimalen Lage, vorzugsweise axial, ausgerichtet sind.

2. Bürstenloser Motor nach Anspruch 1, **dadurch gekennzeichnet, dass** bei einer Mehrzahl von Verbindungsabschnitten (8) zwischen zwei räumlich benachbarten Spulen (5) der Wicklungsdraht (47) von einer Spulenlängsseite (25) der jeweils ersten Spule zu einem Drahtumlenkmittel (37) und von dort zu einer Spulenlängsseite (25) der jeweils zweiten Spule verläuft und die beiden Spulenlängsseiten (25) einander unmittelbar gegenüber liegen.

3. Bürstenloser Motor nach Anspruch 1 oder 2, **dadurch gekennzeichnet, dass** die Kontaktelemente (11) Schneidklemm-Kontakte sind, welche einen distalen Kontaktabschnitt (14) und einen proximalen Kontaktabschnitt (15) aufweisen, wobei jeweils ein Verbindungsabschnitt (8) zwischen zwei Spulen (5) durch den proximalen Kontaktabschnitt (15) des Kontaktelements (11) unmittelbar kontaktiert ist, oder die Kontaktelemente (11) als Schweißkontakte ausgebildet sind.

4. Bürstenloser Motor nach Anspruch 1 oder 3, **dadurch gekennzeichnet, dass** die Kontaktelemente (11) eine oder mehrere Anschlaggeometrien (38) aufweisen können, welche am Isolierelement (4), insbesondere an den Aufnahmen (12) in Fügerichtung anliegen.

5. Bürstenloser Motor nach Anspruch 4, **dadurch gekennzeichnet, dass** die Anschlaggeometrien (38) zwischen dem proximalen Kontaktabschnitt (15) und dem distalen Kontaktabschnitt (14) der achsparallel ausgerichteten Kontaktelemente (11) und außerhalb eines Kontaktbereichs (18), insbesondere außerhalb eines Schlitzbereichs (53) des proximalen Kontaktabschnitts (15) angeordnet sind.

6. Bürstenloser Motor nach zumindest einem der vorangehenden Ansprüche, **dadurch gekennzeichnet, dass** eine axiale Stirnfläche des Statorjochs (2) und/oder der Statorpole (3), einen Anschlag, insbesondere mehrere Anschlagkonturen (17) für die Verschaltungsanordnung (7) bildet.

7. Bürstenloser Motor nach zumindest einem der vorangehenden Ansprüche, **dadurch gekennzeichnet, dass** das Isolierelement (4) eine axiale Anschlagkontur (39) für die Verschaltungsanordnung (7), insbesondere einer Trägerstruktur (36) der Verschaltungsanordnung (7), insbesondere einer Nase, einem Stift (42) oder einem Plateau, aufweist, wobei das Isolierelement (4) um den Stator (1) montiert oder urgeformt ist.

8. Bürstenloser Motor nach zumindest einem der vorangehenden Ansprüche, **dadurch gekennzeichnet, dass** der Wicklungsdraht (47) in radialer Richtung maximal um bis zu 5 mm, insbesondere bis zu 4 mm, insbesondere bis zu 3 mm, insbesondere bis zu 2 mm, insbesondere bis zu 1 mm über den Stator (1) und/oder das Isolierelement (4) radial hinausragt.

9. Bürstenloser Motor nach zumindest einem der vorangehenden Ansprüche, **dadurch gekennzeichnet, dass** sich zumindest zwei von drei Raumbereichen (R1, R2, R3) axial überlappen welche jeweils durch Normalen-Ebenen (46) zu einer Rotordrehachse (40) axial begrenzt sind, wobei der erste Raumbereich (R1) einerseits axial durch das proximale Ende (49) der Kontaktelemente (11) und andererseits durch das distale Ende (50) eines Kontaktbereichs (18) zwischen den Kontaktelementen (11) und den Verbindungsabschnitten (8) des Wicklungsdrahtes (47) begrenzt ist, der zweite Raumbereich (R2) durch einen Wicklungskopf (48) begrenzt ist, wobei der Wicklungskopf (48) als Teil-Volumenbereich der Spulen (5) mit zu einer Rotordrehachse (40) nichtparallelen Draht-Abschnitten axial außerhalb des Statorjochs (2) definiert ist und der dritte Raumbereich (R3) axial von einer ersten Kugellagerstirnseite (44) und einer zweiten Kugellagerstirnseite (45) begrenzt ist.

10. Bürstenloser Motor nach Anspruch 9, **dadurch gekennzeichnet, dass** sich alle drei Raumbereiche (R1, R2, R3) axial überlappen, so dass sie zumindest eine gemeinsame Normalen-Ebene (46) aufweisen.

11. Bürstenloser Motor nach zumindest einem der vorangehenden Ansprüche, **dadurch gekennzeichnet, dass** sich zumindest drei von vier Raumbereichen (R1, R2, R3, R4) axial überlappen welche jeweils durch Normalen-Ebenen (46) zu einer Rotordrehachse (40) axial begrenzt sind, wobei der erste Raumbereich (R1) einerseits axial durch das proximale Ende (49) der Kontaktelemente (11) und andererseits durch das distale Ende (50) eines Kontaktbereichs (18) zwischen den Kontaktelementen (11) und den Verbindungsabschnitten (8) des Wicklungsdrahtes begrenzt ist, der zweite Raumbereich (R2) durch einen Wicklungskopf (48) begrenzt ist, wobei der Wicklungskopf (48) als Teil-Volumenbereich der Spulen (5) mit zu einer Rotordrehachse (40) nichtparallelen Draht-Abschnitten axial außerhalb des Statorjochs (2) definiert ist, der dritte Raumbereich (R3) axial von einer ersten Kugellagerstirnseite (44) und einer zweiten Kugellagerstirnseite (45) begrenzt ist und der vierte Raumbereich (R4) von einem proximalen Endbereich (51) einer Trägerstruktur (36) der Verschaltungsanordnung (7) begrenzt ist.

12. Bürstenloser Motor nach Anspruch 11, **dadurch gekennzeichnet, dass** der proximale Endbereich (51) durch eine dem Stator (1) zugewandte Endfläche der Verschaltungseinheit (7) definiert ist, welche sich im Wesentlichen in einer Normalenebene zur Rotordrehachse (40) erstreckt und sich radial zumindest teilweise über einen Bereich zwischen dem Kugellager (41) und dem Wicklungskopf (48) erstreckt.

13. Bürstenloser Motor nach Anspruch 11, **dadurch gekennzeichnet, dass** der proximale Endbereich (51) durch eine Nase, einen Stift (42) oder ein Plateau der Verschaltungsanordnung (7) begrenzt ist, welcher axial am Stator (1), insbesondere am Statorjoch (2) oder am Isolierelement (4) anliegt.

14. Bürstenloser Motor nach Anspruch 11, 12 oder 13, **dadurch gekennzeichnet, dass** alle vier Raumbereichen (R1, R2, R3, R4) sich axial überlappen, so dass sie zumindest eine gemeinsame Normalen-Ebene (46) aufweisen.

15. Bürstenloser Motor nach zumindest einem der vorangehenden Ansprüche, **dadurch gekennzeichnet, dass** der Durchmesser des Wicklungsdrahtes (47) zwischen 0,2 mm und 2,4 mm, insbesondere die Drahtdurchmesser 0,425mm, 0,45mm, 0,475mm, 0,5mm, 0,53mm 0,56mm, 0,6mm, 0,63mm, 0,67mm, 0,71 mm, 0,75mm, 0,8mm, 0,85mm, und 0,9mm, insbesondere AWG 19, AWG 20, AWG 21, AWG 22, AWG 23, AWG 24, AWG 25, AWG 26.

16. Bürstenloser Motor nach zumindest einem der vorangehenden Ansprüche, **dadurch gekennzeichnet, dass** der Stator (1) mit einer dreiphasigen oder einer fünfphasigen Parallelwicklung oder mit einer bipolaren einphasigen Wicklung bewickelt und verschaltet ist.

17. Bürstenloser Motor nach Anspruch 16, **dadurch gekennzeichnet, dass** die drei Phasen der Statorwicklung (6) durch Leitbleche (16) kontaktiert und verschaltet sind, wobei die Leitbleche (16) mit proximalen Kontaktabschnitten (15) einstückig oder durch Schweißen mit den Leitblechen (16) verbunden sind.

18. .Bürstenloser Motor nach Anspruch 17, **dadurch gekennzeichnet, dass** die distalen Kontaktabschnitte (14) der Kontaktelemente (11) in der Verschaltungsanordnung (7) eingepresst oder gelötet sind.

19. Bürstenloser Motor nach zumindest einem der Ansprüche 1 bis 18, **dadurch gekennzeichnet, dass** der bewickelte Stator (1) und die Kontaktelemente (11) und/oder die Verschaltungsanordnung (7) miteinander umspritzt sind.

20. Verfahren zur Herstellung eines bürstenlosen Motors nach Anspruch 1, **dadurch gekennzeichnet, dass** vor dem Stecken der Kontakte die Aufnahmen (12) mit zähelastischem, ölbeständigen Material ausgegossen werden.

21. Verfahren zur Herstellung eines bürstenlosen Motors nach Anspruch 1, **dadurch gekennzeichnet, dass** die Aufnahmen (12) nach der Kontaktierung mit Gel ausgegossen werden.

22. Pumpenmotor, insbesondere Ölpumpenmotor gemäß einem der vorangehenden Ansprüche.

## Claims

1. A brushless motor having a permanent magnet rotor, mounted in a ball bearing (41), and a wound stator (1), consisting of a stator yoke (2) with a plurality of stator poles (3), an insulating element (4) arranged at the end face, a stator winding (6) comprising a plurality of coils (5), wherein each stator pole (3) is wound with a coil (5), an interconnection arrangement (7) for interconnecting the coils (5) to one another and to electric connections (22), wherein a single winding wire (47) forms without interruption all coils (5) of the stator winding (6) and connecting portions (8) between the coils (5), each connecting portion (8) of the winding wire between two coils (5) only runs between in each case spatially adjacent coils (5) and forms an electrical connection of these coils (5), wherein the connecting portions (8) between two spatially adjacent coils (5) are laid, solely radially exterior to the coils (5), on the insulating element (4), through a cutout (9) or depression and in or around wire deflection means (37) and then through receivers (12), the winding wire (47) between adjacent coils (5) is maintained without interruption in the final assembly state and is part of a winding interconnection, wherein radially exterior to the coils (5) or a perimeter (23) bounded by the coils (5), the insulating element (4) has the receivers (12) for contact elements (11), **characterized in that** the receivers (12) of the insulating element (4) are provided with openings (13) for wire receiving and/or wire guiding and the contact elements (11) are fixable in the receivers (12) by an insertion joining procedure, wherein distal contact portions (14) are oriented in an optimal position from a joining point of view, preferably are oriented axially.

2. A brushless motor according to claim 1, **characterized in that** in the case of a plurality of connecting portions (8) between two spatially adjacent coils (5), the winding wire (47) runs from a coil long side (25) of the respective first coil to a wire deflection means (37) and from there to a coil long side (25) of the respective second coil and the two coil long sides (25) lie directly opposite one another.

3. A brushless motor according to claim 1 or 2, **characterized in that** the contact elements (11) are insulation displacement contacts which have a distal contact portion (14) and a proximal contact portion (15), wherein in each case a connecting portion (8) between two coils (5) is contacted directly by the proximal contact portion (15) of the contact element (11), or the contact elements (11) are in the form of welded contacts.

4. A brushless motor according to claim 1 or 3, **characterized in that** the contact elements (11) can have one or a plurality of stop geometries (38) which contact the insulating element (4), in particular the receivers (12), in the joining direction.

5. A brushless motor according to claim 4, **characterized in that** the stop geometries (38) are arranged between the proximal contact portion (15) and the distal contact portion (14) of the contact elements (11) oriented in an axially-parallel manner and are arranged exterior to a contact region (18), in particular exterior to a slot region (53), of the proximal contact portion (15).

6. A brushless motor according to at least one of the preceding claims, **characterized in that** an axial end face of the stator yoke (2) and/or of the stator poles (3) forms/form a stop, in particular a plurality of stop contours (17), for the interconnection arrangement (7).

7. A brushless motor according to at least one of the preceding claims, **characterized in that** the insulating element (4) has an axial stop contour (39) for the interconnection arrangement (7), in particular a carrier structure (36) of the interconnection arrangement (7), in particular a projection, a pin (42) or a plateau, wherein the insulating element (4) is mounted or primary formed around the stator (1).

8. A brushless motor according to at least one of the preceding claims, **characterized in that** in a radial direction the winding wire (47) projects radially beyond the stator (1) and/or the insulating element (4) maximum by up to 5 mm, in particular up to 4 mm, in particular up to 3 mm, in particular up to 2 mm, in particular up to 1 mm.

9. A brushless motor according to at least one of the preceding claims, **characterized in that** at least two of three spatial regions (R1, R2, R3) overlap axially, which are in each bounded axially by normal planes (46) in relation to a rotor rotational axis (40), wherein the first spatial region (R1) is bounded on the one hand axially by the proximal end (49) of the contact elements (11) and on the other hand by the distal end (50) of a contact region (18) between the contact elements (11) and the connecting portions (8) of the winding wire (47), the second spatial region (R2) is bounded by end windings (48), wherein the end windings (48) are as a partial volume region of the coils (5) defined axially exterior to the stator yoke (2) by wire portions non-parallel to a rotor rotational axis (40) and the third spatial region (R3) is bounded axially by a first ball bearing end face (44) and a second ball bearing end face (45).

10. A brushless motor according to claim 9, **characterized in that** all three spatial regions (R1, R2, R3) overlap axially, so that they at least have a common normal plane (46).

11. A brushless motor according to at least one of the preceding claims, **characterized in that** at least three of four spatial regions (R1, R2, R3, R4) overlap axially, which are in each case axially bounded by normal planes (46) in relation to a rotor rotational axis (40), wherein the first spatial region (R1) is bounded on the one hand axially by the proximal end (49) of the contact elements (11) and on the other hand by the distal end (50) of a contact region (18) between the contact elements (11) and the connecting portions (8) of the winding wire, the second spatial region (R2) is bounded by end windings (48), wherein the end windings (48) are as a partial volume region of the coils (5) defined axially exterior to the stator yoke (2) by wire portions non-parallel to a rotor rotational axis (40), the third spatial region (R3) is bounded axially by a first ball bearing end face (44) and a second ball bearing end face (45) and the fourth spatial region (R4) is bounded by a proximal end region (51) of a carrier structure (36) of the interconnection arrangement (7).

12. A brushless motor according to claim 11, **characterised in that** the proximal end region (51) is defined by an end surface, facing the stator (1), of the interconnection unit (7), which end surface extends substantially in a normal plane in relation to the rotor rotational axis (40) and radially extends at least partially over a region between the ball bearing (41) and the end windings (48).

13. A brushless motor according to claim 11, **characterized in that** the proximal end region (51) is bounded by a projection, a pin (42) or a plateau of the interconnection arrangement (7), which end region axially contacts the stator (1), in particular the stator yoke (2), or the insulating element (4).

14. A brushless motor according to claim 11, 12 or 13, **characterized in that** all four spatial regions (R1, R2, R3, R4) axially overlap one another, so that they at least have a common normal plane (46).

15. A brushless motor according to at least one of the preceding claims, **characterized in that** the diameter of the winding wire (47) [is] between 0.2 mm and 2.4 mm, in particular the wire diameters 0.425mm, 0.45mm, 0.475mm, 0.5mm, 0.53mm, 0.56mm, 0.6mm, 0.63mm, 0.67mm, 0.71mm, 0.75mm, 0.8mm, 0.85mm and 0.9mm, in particular AWG 19, AWG 20, AWG 21, AWG 22, AWG 23, AWG 24, AWG 25, AWG 26.

16. A brushless motor according to at least one of the preceding claims, **characterized in that** the stator (1) is wound and interconnected with a three-phase or a five-phase parallel winding or with a bipolar single-phase winding.

17. A brushless motor according to claim 16, **characterized in that** the three phases of the stator winding (6) are contacted and interconnected by conducting plates (16), wherein the conducting plates (16) are in one piece with proximal contact portions (15) or are connected to the conducting plates (16) by welding.

18. A brushless motor according to claim 17, **characterized in that** the distal contact portions (14) of the contact elements (11) are pressed-in or soldered in the interconnection arrangement (7).

19. A brushless motor according to at least one of claims 1 to 18, **characterized in that** the wound stator (1) and the contact elements (11) and/or the interconnection arrangement (7) are encapsulated with one another.

20. A method of manufacturing a brushless motor according to claim 1, **characterized in that** the receivers (12) are filled with viscoplastic, oil-resistant material before insertion of the contacts.

21. A method of manufacturing a brushless motor according to claim 1, **characterized in that** the receivers (12) are filled with gel after contacting.

22. A pump motor, in particular an oil pump motor, according to any one of the preceding claims.

## Revendications

1. Moteur sans balais avec un rotor à aimants permanents monté dans un roulement à billes (41) et un stator (1) enroulé, constitué d'une culasse de stator (2) avec une pluralité de pôles de stator (3), un élément isolant (4) disposé côté frontal, un enroulement statorique (6) comprenant une pluralité de bobines (5), dans lequel chaque pôle de stator (3) est enroulé avec une bobine (5), un ensemble de connexion (7) pour la connexion des bobines (5) les unes aux autres et avec des raccordements électriques (22), dans lequel un seul fil d'enroulement (47) forme sans interruption toutes les bobines (5) de l'enroulement statorique (6) et des sections de liaison (8) entre les bobines (5), chaque section de liaison (8) du fil d'enroulement entre deux bobines (5) ne s'étend qu'entre des bobines (5) respectivement voisines dans l'espace et forme une liaison électrique de ces bobines (5), dans lequel les sections de liaison (8) entre deux bobines (5) voisines dans l'espace sont posées exclusivement radialement à l'extérieur des bobines (5) sur l'élément isolant (4) à travers un creux (9) ou évidement et dans des ou autour de moyens de renvoi de fil (37) et ensuite à travers des logements (12), le fil d'enroulement (47) entre des bobines (5) voisines reste reçu sans interruption dans l'état de montage final et fait partie d'une connexion d'enroulement, dans lequel l'élément isolant (4) présente radialement à l'extérieur des bobines (5) ou d'un cercle circonscrit (23) de délimitation par les bobines (5) les logements (12) pour des contacts isolants (11), **caractérisé en ce que** les logements (12) de l'élément isolant (4) sont pourvus d'ouvertures (13) pour le logement du fil et/ou guidage du fil et les éléments de contact (11) peuvent être fixés dans les logements (12) par un processus d'assemblage par enfichage, dans lequel des sections de contact distales (14) sont orientées dans une position optimale en technique d'assemblage, de préférence axialement.

2. Moteur sans balais selon la revendication 1, **caractérisé en ce que**, pour une pluralité de sections de liaison (8) entre deux bobines (5) voisines dans l'espace, le fil d'enroulement (47) s'étend d'un côté long de bobine (25) de la première bobine respective à un moyen de renvoi de fil (37) et de là vers un côté long de bobine (25) de la deuxième bobine respective et les deux côtés longs de bobine (25) sont directement opposés l'un à l'autre.

3. Moteur sans balais selon la revendication 1 ou 2, **caractérisé en ce que** les éléments de contact (11) sont des contacts auto-dénudants, lesquels présentent une section de contact distale (14) et une section de contact proximale (15), dans lequel respectivement une section de liaison (8) entre deux bobines (5) est directement mise en contact par la section de contact proximale (15) de l'élément de contact (11), ou les éléments de contact (11) sont réalisés sous la forme de contacts de soudage.

4. Moteur sans balais selon la revendication 1 ou 3, **caractérisé en ce que** les éléments de contact (11) peuvent présenter une ou plusieurs géométries de butée (38), lesquelles s'appliquent contre l'élément isolant (4), en particulier contre les logements (12) dans la direction d'assemblage.

5. Moteur sans balais selon la revendication 4, **caractérisé en ce que** les géométries de butée (38) sont disposées entre la section de contact proximale (15) et la section de contact distale (14) des éléments de contact (11) orientés de manière parallèle à l'axe et à l'extérieur d'une zone de contact (18), en particulier à l'extérieur d'une zone de fente (53) de la section de contact proximale (15).

6. Moteur sans balais selon au moins l'une des revendications précédentes, **caractérisé en ce qu'**une face frontale axiale de la culasse de stator (2) et/ou des pôles de stator (3) forme une butée, en particulier plusieurs contours de butée (17) pour l'ensemble de connexion (7).

7. Moteur sans balais selon au moins l'une des revendications précédentes, **caractérisé en ce que** l'élément isolant (4) présente un contour de butée axial (39) pour l'ensemble de connexion (7), en particulier d'une structure de support (36) de l'ensemble de connexion (7), en particulier un ergot, une tige (42) ou un plateau, dans lequel l'élément isolant (4) est monté ou formé initialement autour du stator (1).

8. Moteur sans balais selon au moins l'une des revendications précédentes, **caractérisé en ce que** le fil d'enroulement (47) fait radialement saillie du stator (1) et/ou de l'élément isolant (4) dans la direction radiale au maximum jusqu'à 5 mm, en particulier jusqu'à 4 mm, en particulier jusqu'à 3 mm, en particulier jusqu'à 2 mm, en particulier jusqu'à 1 mm.

9. Moteur sans balais selon au moins l'une des revendications précédentes, **caractérisé en ce qu'**au moins deux de trois zones spatiales (R1, R2, R3) se chevauchent axialement, lesquelles sont délimitées axialement respectivement par des plans de normale (46) à un axe de rotation de rotor (40), dans lequel la première zone spatiale (R1) est délimitée d'une part axialement par l'extrémité proximale (49) des éléments de contact (11) et d'autre part par l'extrémité distale (50) d'une zone de contact (18) entre les éléments de contact (11) et les sections de liaison (8) du fil d'enroulement (47), la deuxième zone spatiale (R2) est délimitée par une tête d'enroulement (48), dans lequel la tête d'enroulement (48) est définie comme zone volumique partielle des bobines (5) avec des sections de fil non parallèles à un axe de rotation de rotor (40) axialement à l'extérieur de la culasse de stator (2) et la troisième zone spatiale (R3) est délimitée axialement par une première face frontale de roulement à billes (44) et une deuxième face frontale de roulement à billes (45).

10. Moteur sans balais selon la revendication 9, **caractérisé en ce que** les trois zones spatiales (R1, R2, R3) se chevauchent toutes axialement, de sorte qu'elles présentent au moins un plan de normale (46) commun.

11. Moteur sans balais selon au moins l'une des revendications précédentes, **caractérisé en ce qu'**au moins trois de quatre zones spatiales (R1, R2, R3, R4) se chevauchent axialement, lesquelles sont délimitées axialement respectivement par des plans de normale (46) à un axe de rotation de rotor (40), dans lequel la première zone spatiale (R1) est délimitée d'une part axialement par l'extrémité proximale (49) des éléments de contact (11) et d'autre part par l'extrémité distale (50) d'une zone de contact (18) entre les éléments de contact (11) et les sections de liaison (8) du fil d'enroulement, la deuxième zone spatiale (R2) est délimitée par une tête d'enroulement (48), dans lequel la tête d'enroulement (48) est définie comme zone volumique partielle des bobines (5) avec des sections de fil non parallèles à un axe de rotation de rotor (40) axialement à l'extérieur de la culasse de stator (2), la troisième zone spatiale (R3) est délimitée axialement par une première face frontale de roulement à billes (44) et une deuxième face frontale de roulements à billes (45) et la quatrième zone spatiale (R4) est délimitée par une zone d'extrémité proximale (51) d'une structure de support (36) de l'ensemble de connexion (7).

12. Moteur sans balais selon la revendication 11, **caractérisé en ce que** la zone d'extrémité proximale (51) est définie par une surface d'extrémité, tournée vers le stator (1), de l'unité de connexion (7), laquelle s'étend sensiblement dans un plan de normale à l'axe de rotation de rotor (40) et s'étend radialement au moins en partie sur une zone entre le roulement à billes (41) et la tête d'enroulement (48).

13. Moteur sans balais selon la revendication 11, **caractérisé en ce que** la zone d'extrémité proximale (51) est délimitée par un ergot, une tige (42) ou un plateau de l'ensemble de connexion (7), laquelle s'applique axialement contre le stator (1), en particulier contre la culasse de stator (2) ou contre l'élément isolant (4).

14. Moteur sans balais selon la revendication 11, 12 ou 13, **caractérisé en ce que** les quatre zones spatiales (R1, R2, R3, R4) se chevauchent toutes axialement, de sorte qu'elles présentent au moins un plan de normale (46) commun.

15. Moteur sans balais selon au moins l'une des revendications précédentes, **caractérisé en ce que** le diamètre du fil d'enroulement (47) entre 0,2 mm et 2,4 mm, en particulier les diamètres de fil 0,425 mm, 0,45 mm, 0,475 mm, 0,5 mm, 0,53 mm, 0,56 mm, 0,6 mm, 0,63 mm, 0,67 mm, 0,71 mm, 0,75 mm, 0,8 mm, 0,85 mm, et 0,9 mm, en particulier AWG 19, AWG 20, AWG 21, AWG 22, AWG 23, AWG 24, AWG 25, AWG 26.

16. Moteur sans balais selon au moins l'une des revendications précédentes, **caractérisé en ce que** le stator (1) est enroulé avec un enroulement parallèle triphasé ou à cinq phases ou avec un enroulement monophasé bipolaire et connecté.

17. Moteur sans balais selon la revendication 16, **caractérisé en ce que** les trois phases de l'enroulement du stator (6) sont mises en contact par des tôles de guidage (16) et connectées, dans lequel les tôles de guidage (16) sont reliées d'une seule pièce à des sections de contact proximales (15) ou par soudage aux tôles de guidage (16).

18. Moteur sans balais selon la revendication 17, **caractérisé en ce que** les sections de contact distales (14) des éléments de contact (11) sont enfoncées ou brasées dans l'ensemble de connexion (7).

19. Moteur sans balais selon au moins l'une des revendications précédentes 1 à 18, **caractérisé en ce que** le stator (1) enroulé et les éléments de contact (11) et/ou l'ensemble de connexion (7) sont surmoulés les uns avec les autres.

20. Procédé de fabrication d'un moteur sans balais selon la revendication 1, **caractérisé en ce que**, avant l'enfichage des contacts, les logements (12) sont remplis d'une matière viscoélastique, résistante à l'huile.

21. Procédé de fabrication d'un moteur sans balais selon la revendication 1, **caractérisé en ce que** les logements (12) sont remplis de gel après la mise en contact.

22. Moteur de pompe, en particulier moteur de pompe à huile selon l'une quelconque des revendications précédentes.
